(19) Europäisches Patentamt
European Patent Office
Office européen des brevets

(11) **EP 4 180 153 A1**

(12) **EUROPEAN PATENT APPLICATION**

(43) Date of publication:
**17.05.2023 Bulletin 2023/20**

(21) Application number: **22204145.1**

(22) Date of filing: **27.10.2022**

(51) International Patent Classification (IPC):
**B22F 10/34** (2021.01)  **B22F 12/63** (2021.01)
**B29C 64/218** (2017.01)  **B22F 10/14** (2021.01)
**B28B 1/00** (2006.01)  **B33Y 10/00** (2015.01)
**B33Y 30/00** (2015.01)  **B33Y 80/00** (2015.01)

(52) Cooperative Patent Classification (CPC):
**B22F 10/34; B22F 10/14; B22F 12/63; B28B 1/001;
B29C 64/218; B33Y 10/00; B33Y 30/00;
B33Y 80/00;** C04B 2235/602; C04B 2235/6026

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.11.2021 JP 2021184521**

(71) Applicant: **Ricoh Company, Ltd.
Tokyo 143-8555 (JP)**

(72) Inventors:
• **TAKAGI, Hisataka
Tokyo, 143-8555 (JP)**
• **SAOTOME, Ryoichi
Tokyo, 143-8555 (JP)**
• **YAMAGUCHI, Daichi
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(54) **FABRICATED OBJECT, FABRICATION APPARATUS, AND METHOD FOR MANUFACTURING FABRICATED OBJECT**

(57) A fabricated object manufactured from powder (20) contained in a container (21) of a fabrication apparatus is provided. The fabricated object satisfies the following relationship d > d', where d ($\mu$m) denotes a number average diameter of the powder (20) contained in the container (21) and d'($\mu$m) denotes a number average diameter of the powder (20) included in the fabricated object.

FIG. 1

**Description**

BACKGROUND

Technical Field

The present disclosure relates to a fabricated object, a fabrication apparatus, and a method for manufacturing a fabricated object.

Related Art

In recent years, an apparatus for manufacturing a three-dimensional fabricated object has been widely used in a wide variety of fields. For example, there is proposed a fabrication apparatus, having a gap of 10 $\mu$m to 100 $\mu$m between a flattening roller and a cleaning blade to form a fabrication layer with little decrease in an amount of small-particle-diameter powder and little change in composition while reducing adhesion of the powder to the flattening roller (see, for example, Japanese Patent No. 6620505).

SUMMARY

An object of the present invention is to provide a fabricated object having a high green body density and a large number of interparticle points.

A fabricated object according to an embodiment of the present invention is manufactured from a powder contained in a container of a fabrication apparatus and satisfies the following relationship d > d', where d ($\mu$m) denotes a number average diameter of the powder contained in the container and d' ($\mu$m) denotes a number average diameter of the powder included in the fabricated object.

According to embodiments of the present invention, a fabricated object having a high green body density and a large number of interparticle points is provided.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a plan view of a fabrication apparatus according to an embodiment of the present invention;
FIG. 2 is a side view of the fabrication apparatus according to an embodiment of the present invention;
FIG. 3 is a side view of the fabrication apparatus according to an embodiment of the present invention in the vicinity of a powder chamber;
FIG. 4 is a general external view of the fabrication apparatus according to an embodiment of the present invention;
FIG. 5 is an external view of the fabrication apparatus according to an embodiment of the present invention in the vicinity of the powder chamber;
FIG. 6 is a block diagram of a control unit in the fabrication apparatus according to an embodiment of the present invention;
FIG. 7A is a schematic diagram illustrating a method for manufacturing a fabricated object according to an embodiment of the present invention;
FIG. 7B is a schematic diagram illustrating a method for manufacturing a fabricated object according to an embodiment of the present invention;
FIG. 7C is a schematic diagram illustrating a method for manufacturing a fabricated object according to an embodiment of the present invention;
FIG. 7D is a schematic diagram illustrating a method for manufacturing a fabricated object according to an embodiment of the present invention;
FIG. 7E is a schematic diagram illustrating a method for manufacturing a fabricated object according to an embodiment of the present invention;
FIG. 8 is a diagram illustrating a behavior of powder during recoating under a conventional condition;
FIG. 9 is a diagram illustrating a behavior of powder during recoating under a condition according to an embodiment of the present invention;
FIG. 10A is a graph indicating a relationship between a rotation speed of a flattening roller and a force in a horizontal direction;

FIG. 10B is a diagram illustrating a relationship between a rotation speed of the flattening roller and a force in a horizontal direction, during recoating;

FIG. 11 is a graph indicating a relationship between a peripheral speed of the flattening roller and a moving speed of the flattening roller, and a number average diameter;

FIG. 12 is a graph indicating a relationship between the peripheral speed of the flattening roller and the moving speed of the flattening roller, and a proportion of a small-particle-diameter powder;

FIG. 13 is a graph indicating a relationship between the peripheral speed of the flattening roller and the moving speed of the flattening roller, and a green body density; and

FIG. 14 is a graph indicating a relationship between the peripheral speed of the flattening roller and the moving speed of the flattening roller, and the number of contacts per particle.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

In the present disclosure, "powder" is sometimes referred to as "fine grain", "fine particles" or "powder material". "Fabrication liquid" is sometimes referred to as "curing liquid" or "reaction liquid". "Solidified product" is sometimes referred to as a "cured product". "Fabricated object" in which the "solidified products" are laminated is sometimes referred to as "green body", "sintered body", "molded body", or a "three-dimensional fabricated object". An object formed by heat-treating and degreasing "green body" is referred to sometimes as "degreased body". The "green body" and the "degreased body" are sometimes collectively referred to as "sintered precursor". "Fabrication apparatus" is sometimes referred to as "apparatus for manufacturing a three-dimensional fabricated object", "manufacturing apparatus for a three-dimensional fabricated object", or "powder fabrication device". "Method for manufacturing a fabricated object" is sometimes referred to as "method of manufacturing a three-dimensional fabricated object" or "object fabrication method".

(Fabricated Object)

A fabricated object according to an embodiment of the present invention is manufactured from a powder contained in a container of a fabrication apparatus, and satisfies the following relationship d > d', where d ($\mu$m) denotes a number average diameter of the powder contained in the container and d' ($\mu$m) denotes a number average diameter of the powder included in the fabricated object.

Conventionally, a method of manufacturing a fabricated object includes thinly spreading powder while rotating a flattening roller serving as a flattener before discharging a curing liquid. There is a problem that a number average diameter of the powder included in the fabricated object increases as a result of powder having a small particle diameter being scattered by the rotation of the flattening roller. If the number average diameter of the powder included in the fabricated object is large, a gap in the fabricated object increases, and thus, a green body density decreases, the number of interparticle points decreases, and the quality of a green body deteriorates. Therefore, to solve the conventional problem of the scattering of powder having a small particle diameter, a method using powder having a large proportion of powder having a small particle diameter may be considered. However, the powder having a large proportion of the small particle diameter generally deteriorates in fluidity, and thus, there is a problem that such powder is non-uniformly supplied into a fabrication chamber when the powder is flattened by the flattening roller. If the powder is supplied to the fabrication chamber in a hopper configuration, there is also a problem that the powder does not flow out smoothly and is supplied non-uniformly. As a result, there is a possibility that non-uniform quality occurs within the fabrication chamber. Therefore, it is desirable to solve the problem that the powder having a small particle diameter is reduced in amount by a method other than changing a particle size distribution of the powder.

The conventional technique described in Japanese Patent No. 6620505 proposes a technique of depositing, in a flattening region, powder adhering to a flattening roller, and powder having a small particle diameter scattered without adhering to the flattening roller is not supplied inside a fabricated object. The powder having a small particle diameter has a small weight and is wound up by the rotation of the flattening roller, and thus, it is considered that there is more powder scattered than the powder adhering to the flattening roller. Such a technique is to deposit the powder having a small particle diameter between layers, rather than to uniformly supply the powder having a small particle diameter, as a result, the fabrication quality is biased. Even when powder having a large proportion of powder having a small particle diameter is applied to the conventional technique, it is not possible to solve the problem of non-uniform quality of the fabricated object. Therefore, with the conventional technique, it is not possible to obtain an effect of solving the problem that as a result of the powder having a small particle diameter being scattered by the rotation of the flattening roller, the number average diameter of the powder included in the fabricated object increases than the powder used for the object fabrication.

Based on the above findings, as a result of diligent studies by the inventors of the present invention, the inventors of the present invention found that if a number average diameter of powder included in a fabricated object was focused, when a fabricated object was formed with powder having a smaller number average diameter than the powder used for the object fabrication, even when powder with a large number average diameter was used to stabilize quality and supply of the fabricated object, it was possible to obtain a fabricated object having an excellent quality of the green body including a high green body density and a large number of interparticle points, and reached the present invention.

Therefore, according to an embodiment of the present invention, the fabricated object is fabricated from a powder contained in a container of a fabrication apparatus, and satisfies the following relationship d > d', where d ($\mu$m) denotes a number average diameter of the powder contained in the container and d'($\mu$m) denotes a number average diameter of the powder included in the fabricated object. When the following relationship d > d' is satisfied, powder having a small particle diameter is prevented from reducing in amount during recoating and powder having a large particle diameter is effectively eliminated, and thus, a fabricated object having an excellent quality of the green body including a high green body density and a large number of interparticle points is obtained.

As long as the powder is contained in the container of the fabrication apparatus, there is no restriction, and the power may be appropriately selected according to a purpose. The powder contained in the container also includes powder before the object fabrication, in particular, before flattening processing by a flattener of the fabrication apparatus. The number average diameter d of the powder contained in the container is preferably 3 $\mu$m or more and 80 $\mu$m or less, more preferably 5 $\mu$m or more and 50 $\mu$m or less, and further preferably 15 $\mu$m or more and 40 $\mu$m or less. A proportion of small-particle-diameter powder having a number-based particle diameter of (0.6 $\times$ number average diameter d) $\mu$m or less in the powder contained in the container is preferably 20% or more, more preferably 23% or more, further preferably 25% or more, particularly preferably 26% or more, and more particularly preferably 27% or more. It is noted that an upper limit of the proportion of the small-particle-diameter powder is preferably 40% or less, and more preferably 30% or less.

The powder included in the fabricated object means powder present in a fabricated object manufactured by using the powder contained in the container of the fabrication apparatus, which is powder in the fabricated object after being combined by the fabrication liquid. A number average diameter d' of the powder included in the fabricated object is preferably 3 $\mu$m or more and 80 $\mu$m or less, more preferably 5 $\mu$m or more and 50 $\mu$m or less, and further preferably 15 $\mu$m or more and 40 $\mu$m or less. A proportion of small-particle-diameter powder having a number-based particle diameter of (0.6 $\times$ number average diameter d) $\mu$m or less, relative to the powder included in the fabricated object is preferably 20% or more, more preferably 23% or more, further preferably 25% or more, particularly preferably 26% or more, and more particularly preferably 27% or more. It is noted that an upper limit of the proportion of the small-particle-diameter powder is preferably 40% or less, and more preferably 30% or less.

The number average diameter d ($\mu$m) of the powder contained in the container, the number average diameter d' ($\mu$m) of the powder included in the fabricated object, and the proportion of the small-particle-diameter powder having a number particle diameter of (0.6 $\times$ number average diameter d) $\mu$m or less can be measured as follows. To measure the number average diameter d ($\mu$m) of the powder contained in the container and the number average diameter d' ($\mu$m) of the powder included in the fabricated object under the same measurement conditions, the number average diameter d ($\mu$m) of the powder contained in the container is measured from a beaker work body, as described below.

<Preparation of Beaker Work Body>

The beaker work body is a test sample simply prepared, without using a fabrication apparatus, by mixing powder used for object fabrication and a fabrication liquid in a beaker, placing the resulted mixture into a mold, and then curing the mixture. The beaker work body makes it possible to measure a particle size distribution of the powder (i.e., powder contained in the container) used for object fabrication under the same condition as that of the fabricated object.

The particle size distributions of the fabricated object and the beaker work body are measured as follows.

<Measurement of Particle Size Distribution of Powder Included in Fabricated Object and Beaker Work Body>

The manufactured fabricated object and the beaker work body are observed with an X-ray computed tomography (CT) device, and the particle size distribution is calculated from image analysis of the obtained three-dimensional CT image. Xradia 510 (manufactured by Carl Zeiss) is employed for the X-ray CT device. The imaging conditions are: an X-ray voltage of 80 kV, an X-ray power of 7 W, an exposure time of 3 seconds, a capturing angle of 360 degrees, and 2401 images to be captured. A visual field range is of cylindrical shape having diameter ($\varphi$) 1529.7 x height (H) 1529.7 ($\mu$m$^3$, and a voxel size is 1.5057 $\mu$m. Three-dimensional (3D) image analysis software, Dragonfly (manufactured by Object Research System) is employed for the image analysis. The analysis is carried out as follows. Firstly, for the visual field range, image segmentation (identification) is performed using deep learning (algorithm: FC-DenseNet) to separate particles and voids. Subsequently, aggregated particles are separated one by one by a Python module called OpenPNM. Finally, an equivalent diameter is calculated for each particle, and the number-based particle size distribution (i.e., proportion of the small-particle-diameter powder having a number average diameter of (0.6 $\times$ number average diameter) $\mu$m or less) for 10,000 particles is calculated.

The fabricated object is formed by applying a fabrication liquid to a powder layer including powder deposited in a fabrication chamber and laminating a fabrication layer obtained by solidifying the powder particles in the powder layer.

<Powder>

The powder includes (1) powder containing a base material, and (2) powder containing a base material and an organic material. (1) The powder containing a base material preferably comprises a base material. (2) The powder containing a base material and an organic material preferably has a configuration that a surface of the base material is covered with the organic material. It is noted that the powder used in the present disclosure is suitably used in various types of three-dimensional object fabrication methods including a selective laser sintering (SLS) method, a Si-Metal-Si (SMS) method, a high-speed sintering (HSS) method, and a binder jetting (BJ) method.

- Base Material -

The base material is not particularly limited as long as such a base material has a form of powder or particles, and can be appropriately selected depending on a purpose. Examples of the base material include, but are not limited to, metal, ceramics, carbon, polymer, wood, a biocompatible material, sand, and magnetic materials. and from a viewpoint of obtaining an extremely high-strength three-dimensional fabricated object, metal and ceramics that can be finally sintered (processed) are preferable.

The metal is not particularly limited, and examples thereof include, but are not limited to, magnesium (Mg), aluminum (Al), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), lead (Pd), silver (Ag), indium (In), tin (Sn), tantalum (Ta), tungsten (W), neodymium (Nd), and alloys thereof. Each of these may be used alone or in combination with others. In particular, aluminum, zinc, magnesium, copper, stainless steel, titanium and alloys thereof are suitable. Examples of the aluminum alloy include, but are not limited to, AlSi$_{10}$Mg, AlSi$_{12}$, AlSi$_7$Mg$_{0.6}$, AlSi$_3$Mg, AlSi$_9$Cu$_3$, Scalmalloy, and ADC$_{12}$.

Examples of the ceramics include, but are not limited to, an oxide, a carbide, a nitride, and a hydroxide. Examples of the oxide include, but are not limited to, a metal oxide. Examples of the metal oxide include, but are not limited to, silica (SiO$_2$), alumina (Al$_2$O$_3$), zirconia (ZrO$_2$), and titania (TiO$_2$). Each of these may be used alone or in combination with others.

A commercially available product may be used for the base material. Examples of the commercially available product include, but are not limited to, Pure Al (manufactured by Toyo Aluminum K.K., A1070-30BB), Pure Ti (manufactured by OSAKA Titanium technologies Co.,Ltd.), SUS316L (manufactured by Sanyo Special Steel Co., Ltd., product name: PSS316L); AlSI10Mg (manufactured by Toyo Aluminum K.K., Si10MgBB); SiO$_2$ (manufactured by Tokuyama Corporation, product name: EXCELICA SE-15K), AlO$_2$ (manufactured by Taimei Chemicals Co., Ltd., product name: Taimicron TM-5D), and ZrO$_2$ (manufactured by Tosoh Corporation, product name: TZ-B53). The base material may be subjected to a known surface treatment (surface modification treatment) to improve adhesion to an organic material and to improve coating properties.

-Organic Material-

Any organic material may be used for the organic material in the case (1) above as long as the organic material has a reactive functional group, is soluble in the fabrication liquid, and is reactive with a cross-linker included in the fabrication liquid to form a cross-linked structure by covalent bond.

The reactive functional group is not particularly limited as long as such a reactive functional group is reactive with a cross-linker to form a covalent bond, and may be suitably selected according to a purpose. Examples thereof include, but are not limited to, a hydroxyl group, a carboxyl group, an amide group, a phosphate group, a thiol group, an acetoacetyl group, and an ether bond. Specifically, a resin having a hydroxyl group is preferred as the organic material for improving the adhesion to the base material and the reactivity with the cross-linker.

The organic material is preferably a resin having a hydroxyl group. Examples of the resin include, but are not limited to, polyvinyl acetal (glass transition temperature: 107°C), polyvinyl butyral (glass transition temperature: 67°C), polyacrylic polyol (glass transition temperature: 80°C), polyester polyol (glass transition temperature: 133°C), polybutadiene polyol (glass transition temperature: -17°C), ethyl cellulose (glass transition temperature: 145°C), and nitrocellulose (glass transition temperature: 50°C). Examples of the resin further include, but are not limited to, a partially saponified product of vinyl acetate copolymer (vinyl chloride-vinyl acetate copolymer, ethylene-vinyl acetate copolymer, and the like), polyether polyol, and phenolic polyol. Each of these may be used alone or in combination with others. Among these resins, polyacrylic polyol is preferable.

<Fabrication Liquid>

The fabrication liquid used in the present disclosure is applied to the powder to solidify the particles of the powder. In a case (1) in which the powder contains the base material and the organic material, the fabrication liquid preferably contains a cross-linker and an organic solvent, and further contains another component as appropriate. In a case (2) in which the powder contains the base material, the fabrication liquid preferably contains an organic material, a cross-linker, and an organic solvent, and further contains another component as appropriate.

In the case (1) above, when the fabrication liquid is applied to the organic material included in the powder, the organic material is dissolved by the organic solvent included in the fabrication liquid and is crosslinked by an action of the cross-linker included in the fabrication liquid. In the case (2) above, when the fabrication liquid is applied to the powder, the organic material included in the fabrication liquid precipitates due to volatilization of the organic solvent to solidify the powder.

-Organic Material-

The organic material included in the fabrication liquid in the case of (2) above is preferably a resin having a hydroxyl group for the adhesion of the interface between the metal, as the base material, and the organic material. Examples of the resin having a hydroxyl group include, but are not limited to, polyvinyl acetal, polyvinyl butyral, polyacrylic polyol, polyester polyol, polybutadiene polyol, ethyl cellulose, nitrocellulose, polyvinylpyrrolidone, a partially saponified product of vinyl acetate copolymer (vinyl chloride-vinyl acetate, ethylene-vinyl acetate, and the like), polyether polyol, and phenolic polyol. Each of these may be used alone or in combination with others. A proportion of the organic material to a total amount of the fabrication liquid is preferably 1% by mass or more and 20% by mass or less, and more preferably 1% by mass or more and 10% by mass or less.

Examples of the organic solvent include, but are not limited to, an aliphatic hydrocarbon or an aromatic hydrocarbon including n-octane, m-xylene, and solventnaphtha; ketones including diisobutylketone, 3-heptanone, and 2-octanone; esters including butyl acetate, amyl acetate, n-hexyl acetate, n-octyl acetate, ethyl butyrate, ethyl valerate, ethyl caprylate, ethyl octylate, ethyl acetoacetate, ethyl 3-ethoxypropionate, diethyl oxalate, diethyl malonate, diethyl succinate, diethyl adipic acid, bis 2-ethylhexyl maleate, triacetin, tributyrin, and ethylene glycol monobutyl ether acetate; esters including dibutyl ether, 1,2-dimethoxybenzene, and 1,4-dimethoxybenzene; dimethyl sulfoxide, and dihydroterpinyl acetate. Each of these may be used alone or in combination with others.

A proportion of the organic solvent to a total amount of the fabrication liquid is preferably 30% by mass or more and 90% by mass or less, and more preferably 50% by mass or more and 80% by mass or less. When the proportion of the organic solvent is 30% by mass or more and 90% by mass or less, solubility of the resin is increased and a strength of the three-dimensional fabricated object is increased. Also, a nozzle is prevented from drying when the apparatus is not operating (on standby), and nozzle clogging and printing failure caused thereby are prevented.

- Cross-linkers -

In the case of (1) above, the cross-linker forms a covalent bond with a reactive functional group of the organic material (resin) of the powder to form a crosslinked structure, further increasing a strength of the obtained solidified product, and improving a solvent resistance. Further, in the case of (2) above, after the fabrication liquid adheres to the powder, the cross-linker cross-links by heat or ultraviolet rays, to further increase the strength of the obtained solidified product, and to improve a solvent resistance. It is noted that as used herein, the "cross-linker" is synonymous with the "curing agent".

The cross-linker is not particularly limited, and may be appropriately employed from isocyanate, acid anhydride, epoxy, and phenol aldehyde. Preferably, the cross-linker has two or more of any of the above in a molecule or at an end of the molecule, and further preferably has three or more of the above.

- Other Components -

Other components are not particularly limited and appropriately selected according to a purpose, Examples thereof include, but are not limited to, a surfactant, an anti-drying agent, a viscosity regulator, a penetrant, a defoamer, a potential hydrogen (pH) regulator, a preservative, a fungicide, a colorant, a preservative, and a stabilizer.

In one embodiment of the present invention, it is preferable that the powder contains metal particle, and that the metal particle contains at least one selected from aluminum, zinc, magnesium, and alloys thereof. According to such an embodiment, a fabricated object having a high green body density and a large number of interparticle points is achieved.

In one embodiment of the present invention, it is preferable that a surface of the metal particles is not covered with the resin. According to such an embodiment, a fabricated object having a high green body density and a large number of interparticle points is achieved.

(Fabrication Apparatus and Method of Manufacturing Fabricated Object)

The fabrication apparatus according to an embodiment of the present invention is an apparatus for manufacturing the fabricated object according to an embodiment of the present invention. The fabrication apparatus includes a fabrication chamber in which a powder layer including powder is laminated, and a flattener that flattens the powder layer, and further includes, if necessary, other means. The flattener satisfies the following relationship $V/v \geq 0.04$, and preferably satisfies the following relationship $V/v \geq 0.1$. Here, v represents a peripheral speed (mm/s) of the flattener and V represents a moving speed (mm/s) of the flattener.

A method for manufacturing a fabricated object according to an embodiment of the present invention is a method of manufacturing the fabricated object according to an embodiment of the present invention. The method includes laminating a powder layer formed of powder, flattening the powder layer with a flattener, and further includes, if necessary, another step. The flattener satisfies the following relationship $V/v \geq 0.04$, and preferably satisfies the following relationship $V/v \geq 0.1$. Here, v represents a peripheral speed (mm/s) of the flattener and V represents a moving speed (mm/s) of the flattener.

Examples of the flattener include, but are not limited to, a flattening roller.

When an object is fabricated under the above flattening condition, the powder having a small particle diameter is prevented from reducing in amount during recoating and also the powder having a large particle diameter is effectively eliminated, and as a result, the following relationship $d > d'$ is satisfied, where d ($\mu$m) denotes a number average diameter of the powder contained in the container of the fabrication apparatus and d' ($\mu$m) denotes a number average diameter of the powder included in the fabricated object.

Here, an embodiment of the present invention will be described in detail with reference to the drawings. It is noted that in each drawing, the same reference numerals are used for the same components, and redundant description are omitted if appropriate. Further, the number, the position, the shape, and the like of the constituent members described below are not limited to those in the present embodiment, and can be suitably set to a preferable number, position, shape, and the like in implementing the present invention.

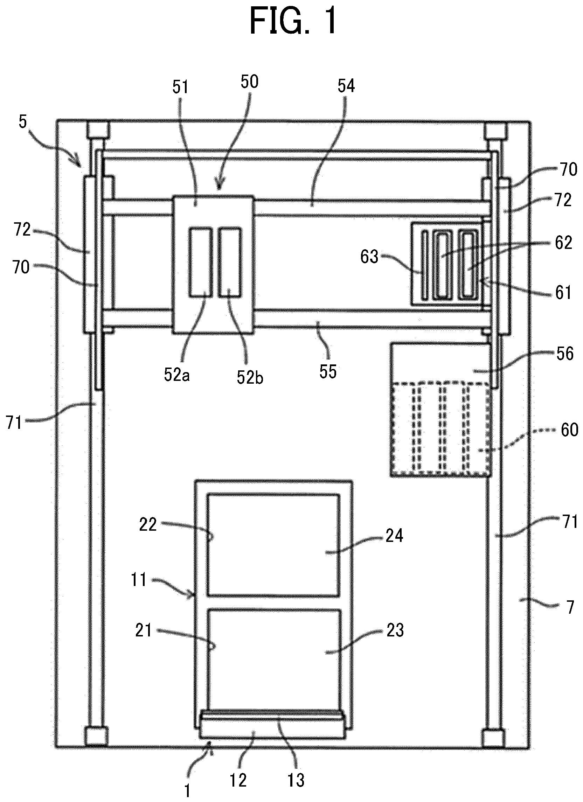

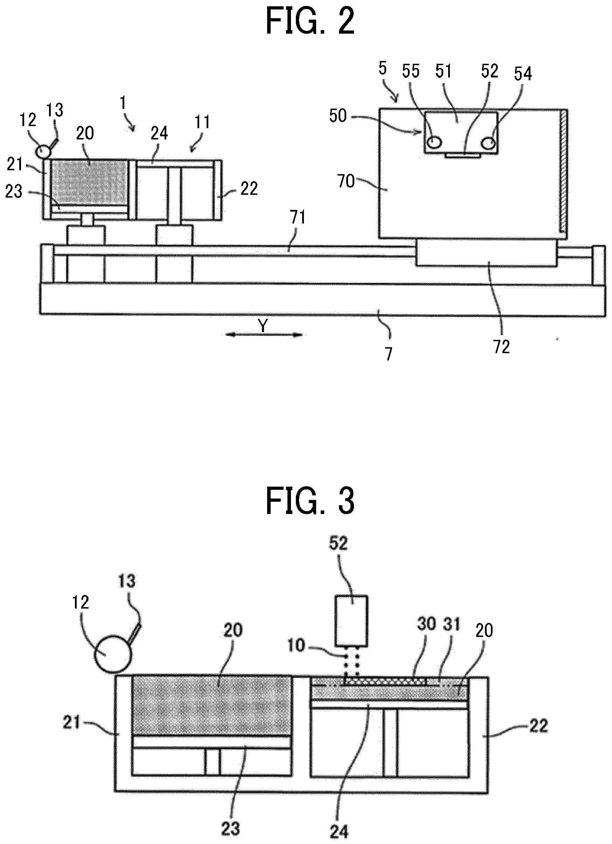

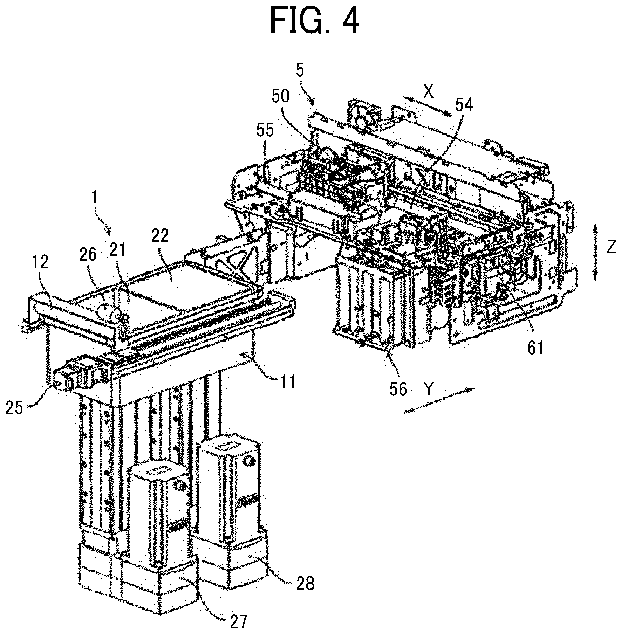

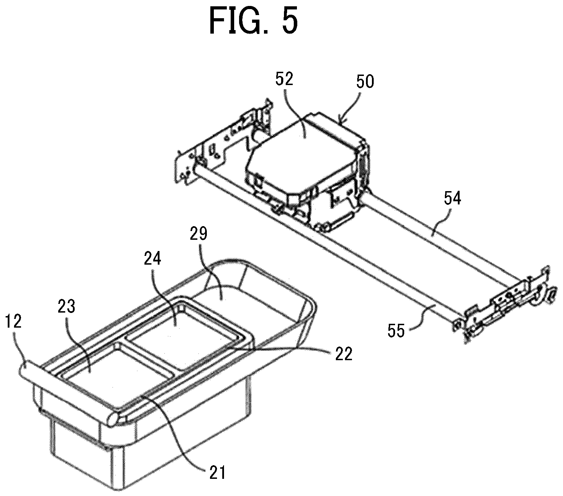

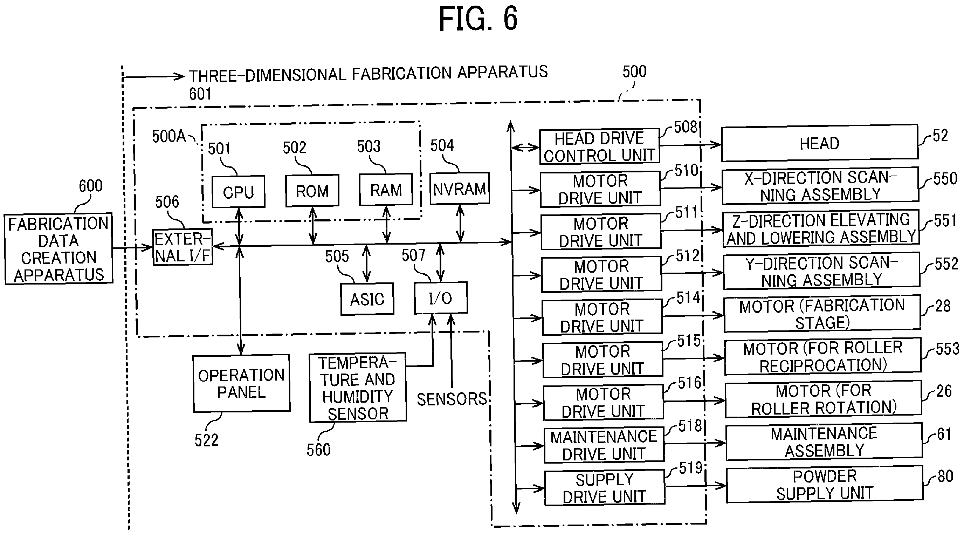

FIG. 1 is a plan view of a fabrication apparatus according to an embodiment of the present invention, FIG. 2 is a side view of the fabrication apparatus according to an embodiment of the present invention, FIG. 3 is a side view of the fabrication apparatus according to an embodiment of the present invention in the vicinity of a powder chamber, FIG. 4 is a general external view of the fabrication apparatus according to an embodiment of the present invention, FIG. 5 is an external view of the fabrication apparatus according to an embodiment of the present invention in the vicinity of the powder chamber, and FIG. 6 is a block diagram of a control unit in the fabrication apparatus according to an embodiment of the present invention.

A fabrication apparatus illustrated in FIG. 1 includes a fabrication unit 1 in which a fabrication layer 30, which is a layered fabricated object formed by powder being combined, is formed, and a fabrication unit 5 that fabricates a three-dimensional fabricated object by discharging a fabrication liquid 10 onto a powder layer 31 spread in layers, of the fabrication unit 1.

The fabrication unit 1 includes a powder chamber 11 and a flattening roller 12 as a rotator serving as a flattener (recoater).

The powder chamber 11 includes a supply chamber 21 that supplies powder 20 and a fabrication chamber 22 in which the fabrication layer 30 is laminated to manufacture a three-dimensional fabricated object. A bottom of the supply chamber 21 acts as a supply stage 23 and is freely elevated and lowered in a vertical direction (height direction). Similarly, a bottom of the fabrication chamber 22 acts as a fabrication stage 24 and is freely elevated and lowered in the vertical direction (height direction). A three-dimensional fabricated object in which the fabrication layer 30 is laminated is manufactured on the fabrication stage 24.

The supply stage 23 is elevated and lowered in an arrow Z direction (height direction) by a motor 27, as illustrated in FIG. 4, for example. Similarly, the fabrication stage 24 is elevated and lowered in the arrow Z direction by a motor 28.

The powder chamber 11 includes a box-shaped chamber in which two top surfaces of the supply chamber 21 and the fabrication chamber 22 are opened. The supply stage 23 is arranged inside the supply chamber 21 and the fabrication stage 24 is arranged inside the fabrication chamber 22, both of which are freely elevated and lowered. A side surface of the supply stage 23 is arranged to contact an inner side surface of the supply chamber 21. A side surface of the fabrication stage 24 is arranged to contact an inner side surface of the fabrication chamber 22. Top surfaces of the supply stage 23 and the fabrication stage 24 are kept horizontal. Next to the fabrication chamber 22 including an area surrounding the supply chamber 21 and the fabrication chamber 22, a surplus powder receiving chamber 29 may be arranged (FIG. 5).

If the surplus powder receiving chamber 29 is provided, the surplus powder 20, out of the powder 20 transferred and supplied by the flattening roller 12, falls when the powder layer 31 is formed.

The flattening roller 12 supplies the powder 20 supplied on the supply stage 23 of the supply chamber 21 to the fabrication chamber 22, the supplied powder 20 is flattened by the flattening roller 12 being a flattening member to form the powder layer 31. The flattening roller 12 is arranged to be reciprocally movable relative to a stage surface in an arrow Y direction along a stage surface (surface on which the powder 20 is laminated) of the fabrication stage 24, and is moved by a reciprocating movement assembly 25. The flattening roller 12 is rotationally driven by a motor 26.

The flattening roller 12 transfers and supplies the powder 20 from the supply chamber 21 to the fabrication chamber 22 and smooths and flattens the surface of the powder 20 to form the powder layer 31 which is a layered powder having a predetermined thickness. The flattening roller 12 is a rod-shape member longer than an inside dimension of the fabrication chamber 22 and the supply chamber 21 (that is, a width of a portion supplied with or stored with the powder 20), and is reciprocally moved by the reciprocating movement assembly 25 in a Y direction (sub-scanning direction) along the stage surface. The flattening roller 12 horizontally moves to pass through an area above the supply chamber 21 and the fabrication chamber 22 from an outside of the supply chamber 21 while being rotated by the motor 26. As a result, the powder 20 is transferred and supplied onto the fabrication chamber 22, and the flattening roller 12 flattens the powder 20 while passing over the fabrication chamber 22, thus forming the powder layer 31.

As illustrated in FIG. 2, a powder removal plate 13, which is a powder removal member for removing the powder 20 adhering to the flattening roller 12 by contacting a circumferential surface of the flattening roller 12, is arranged. The powder removal plate 13 moves together with the flattening roller 12 while contacting the circumferential surface of the flattening roller 12. The powder removal plate 13 is arranged to be in a counter direction when the flattening roller 12 rotates in a rotation direction when the flattening roller 12 flatten the powder.

In the present embodiment, a configuration is employed in which the powder chamber 11 of the fabrication unit 1 includes the two chambers, that is, the supply chamber 21 and the fabrication chamber 22, but a configuration may be employed in which the fabrication chamber 22 is simply provided, the powder is supplied from the power supply device to the fabrication chamber 22 and the supplied powder is flattened by the flattening unit.

The fabrication unit 5 includes a liquid discharge unit 50 that discharges the fabrication liquid 10 to the powder layer 31 on the fabrication stage 24. The fabrication unit 5 includes a slider unit 72 movably held by a guide member 71 arranged on a base member 7, and allows for generally reciprocating movement in the Y direction (sub-scanning direction) orthogonal to an X direction. Such a fabrication unit 5 is generally reciprocated and moved in the Y direction by a Y-direction scanning assembly 552 described later.

The liquid discharge unit 50 includes a carriage 51, and two liquid discharge heads (hereinafter simply referred to as "head") 52a and 52b mounted on the carriage 51. (The number of the liquid discharge heads may be one, or three or more.) The liquid discharge unit 50 is arranged, together with guide members 54 and 55, to be elevated and lowered in the arrow Z direction, and elevated and lowered in a Z direction by a Z-direction elevating and lowering assembly 551 described later.

The carriage 51 is movably held by the guide members 54 and 55. The guide members 54 and 55 are held by side plates 70 on both sides to be freely elevated and lowered.

Such a carriage 51 is reciprocated and moved by an X-direction scanning assembly 550 described later in an arrow X direction (hereafter simply referred to as "X direction", and the same applies to other directions, that is, the arrow Y direction and the arrow Z direction) which is a main scanning direction via a main scanning movement mechanism configured by a motor, a pulley, and a belt. The carriage 51 integrally includes a post powder supply unit 80 which is a post power supply means that supplies the powder 20 to at least a portion to which the fabrication liquid 10 adheres when one fabrication layer 30 is formed in the fabrication chamber 22.

The two heads 52a and 52b (hereinafter, collectively referred to as "head 52" unless otherwise particularly necessary) each includes two nozzle arrays in which a plurality of nozzles that discharges a liquid are arranged. Each nozzle array discharges the fabrication liquid. It is noted that the configuration of the head 52 and the liquid to be discharged are not limited to the above-described example. A plurality of tanks 60 containing each of the liquids are attached to a tank attachment unit 56, and each liquid is supplied to the heads 52a and 52b via a supply tube or the like.

On one side in the X direction, a maintenance assembly 61 that maintains and recovers the head 52 of the liquid discharge unit 50 is arranged. The maintenance assembly 61 mainly includes a cap 62 and a wiper 63. The cap 62 is brought into close contact with a nozzle surface (surface formed thereon with the nozzle) of the head 52 to suction the fabrication liquid 10 from the nozzle. This is to discharge the powder 20 blocking the nozzle and discharge the highviscosity fabrication liquid 10. Subsequently, the nozzle surface is wiped (cleaned) by the wiper 63 to form meniscus of the nozzle (the pressure is negative inside the nozzle). When the fabrication liquid 10 is not discharged, the maintenance assembly 61 covers the nozzle surface of the head 52 with the cap 62 to prevent the powder 20 from entering the nozzle and to prevent the fabrication liquid 10 from drying.

An outline of a control unit of the apparatus for manufacturing a three-dimensional fabricated object will be described with reference to FIG. 6. FIG. 6 is a block diagram of the control unit of the apparatus for manufacturing a three-dimensional fabricated object.

The control unit 500 includes and a main control unit 500A. The main control unit 500A includes a central processing unit (CPU) 501 that generally controls the apparatus for manufacturing a three-dimensional fabricated object, a read only memory (ROM) 502 that stores a program including a program for causing the CPU 501 to execute control a three-dimensional fabrication operation including a control according to an embodiment of the present invention and stores other fixed data, and a random access memory (RAM) 503 that temporarily stores fabrication data and the like.

The control unit 500 includes a nonvolatile memory (NVRAM) 504 that retains data even while the apparatus is powered off. The control unit 500 further includes an application specific integrated circuit (ASIC) 505 to perform image processing in which various types of signals are processed on image data and processing of input and output signals for controlling the entire apparatus.

The control unit 500 includes an external interface (I/F) 506 to send and receive data and signals used when the controller 500 receives fabrication data from an external fabrication data creation apparatus 600. The fabrication data creation apparatus 600 generates fabrication data in which a final-form fabricated object is sliced in each fabrication layer, and includes an information processor such as a personal computer.

The control unit 500 includes an input-output (I/O) 507 that receives detection signals of various types of sensors.

The control unit 500 includes a head drive control unit 508 that controls driving of the head 52 of the liquid discharge unit 50.

The control unit 500 includes a motor drive unit 510 that drives a motor included in the X-direction scanning assembly 550 and a motor drive unit 512 that drives a motor included in the Y-direction scanning assembly 552. The X-direction scanning assembly 550 moves the carriage 51 of the liquid discharge unit 50 in the X direction (main scanning direction). The Y-direction scanning assembly 552 moves the fabrication unit 5 in the Y direction (sub-scanning direction).

The control unit 500 includes a motor drive unit 511 that drives a motor included in the Z-direction elevating and lowering assembly 551. The Z-direction elevating and lowering assembly 551 moves (elevates and lowers) the carriage 51 of the liquid discharge unit 50 in the Z direction. The Z direction elevating assembly 551 may move (elevates and lowers) the entire fabrication unit 5 in the arrow Z direction.

The control unit 500 further includes a motor drive unit 515 that drives a motor 553 of the reciprocating movement assembly 25 for moving the flattening roller 12 and a motor drive unit 516 that rotationally drives the motor 26 for rotating the flattening roller 12.

The control unit 500 includes a post supply drive unit 519 configured so that the powder 20 is supplied from the post powder supply unit 80.

The I/O 507 of the control unit 500 is input with a detection signal of a temperature and humidity sensor 560 that detects a temperature and a humidity as an environmental condition of the apparatus and detection signals of another sensors.

The control unit 500 is connected with an operation panel 522 used to input and display information necessary for the apparatus.

The fabrication data creation apparatus 600 and a three-dimensional fabrication apparatus (powder laminating fabrication apparatus) 601 form a fabrication system.

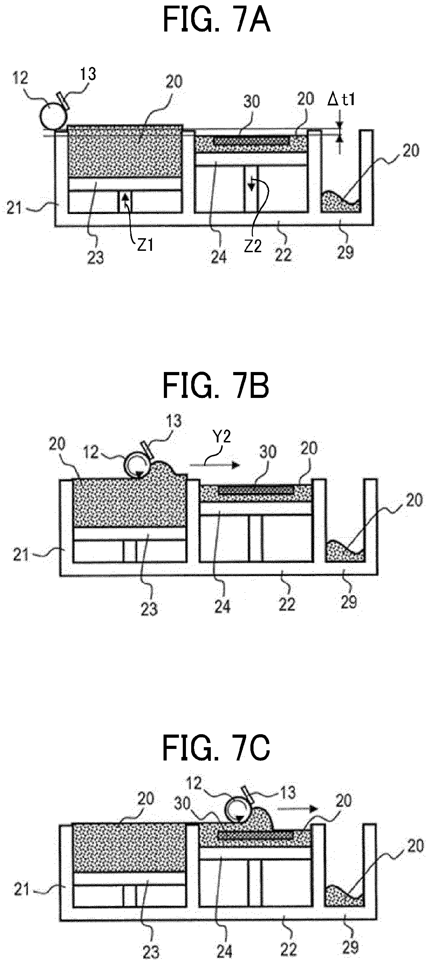

Next, a flow of fabrication will be described with reference to FIGS. 7A to 7E. FIGS. 7A to 7E are schematic explanatory diagrams for explaining the flow of the fabrication.

Firstly, the fabrication layer 30 being a first layer is formed on the fabrication stage 24 of the fabrication chamber 22. When the next fabrication layer 30 is formed on such a fabrication layer 30, as illustrated in FIG. 7A, the supply stage 23 of the supply chamber 21 is elevated in a Z1 direction, and the fabrication stage 24 of the fabrication chamber 22 is lowered in a Z2 direction.

At this time, a lowering distance of the fabrication stage 24 is set so that a distance between a top surface of the fabrication chamber 22 (powder layer top surface) and a bottom of the flattening roller 12 (bottom tangential portion) is $\Delta t1$. The distance $\Delta t1$ corresponds to a thickness of the powder layer 31 to be subsequently formed. As an example, the distance Δt1 is preferably about several tens μm to about 100 μm.

Next, as illustrated in FIG. 7B, when the powder 20 located above a top surface level of the supply chamber 21 is moved in a Y2 direction (to a fabrication chamber 22 side) while the flattening roller 12 is rotated in a forward direction (arrow direction) to transfer and supply the powder 20 to the fabrication chamber 22 (supply powder).

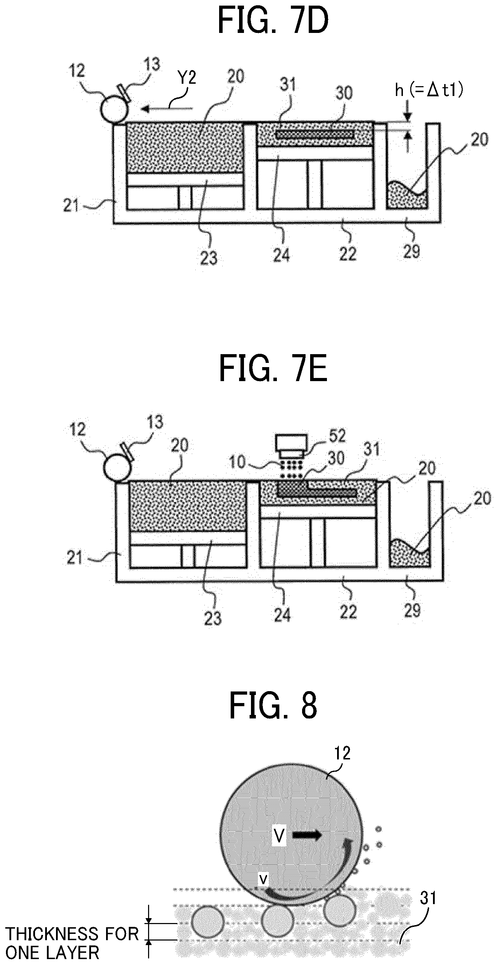

Next, as illustrated in FIG. 7C, the flattening roller 12 is moved in parallel to a stage surface of the fabrication stage 24 of the fabrication chamber 22, and as illustrated in FIG. 7D, the powder layer 31 having a predetermined thickness Δt1 is formed on the fabrication layer 30 of the fabrication stage 24 (flattening). After the powder layer 31 is formed, the flattening roller 12 moves in the Y1 direction and returns to an initial position as illustrated in FIG. 7D. Here, the flattening roller 12 is designed to allow for movement while maintaining a constant distance from the top surface level of the fabrication chamber 22 and the supply chamber 21. When the flattening roller 12 moves with a constant distance, it is possible to form the powder layer 31 having a uniform thickness Δt1 on the fabrication chamber 22 or the already formed fabrication layer 30 while transporting the powder 20 onto the fabrication chamber 22 by the flattening roller 12.

Next, as illustrated in FIG. 7E, a droplet of the fabrication liquid 10 is discharged from the head 52 of the liquid discharge unit 50 to laminate and form the fabrication layer 30 on the next powder layer 31 (fabrication). It is noted that when the fabrication liquid 10 discharged from the head 52 is mixed with the powder 20, for example, adhesive included in the powder 20 is dissolved, and dissolved adhesive parts adhere one another to bond the powder 20 to form the fabrication layer 30.

Next, the above-described forming the powder layer 31 by supplying and flattening the powder and the above-described discharging the fabrication liquid 10 with the head 52 are repeated to form the new fabrication layer 30. At this time, the newly-formed fabrication layer 30 and the fabrication layer 30 therebeneath are united to form a part of a three-dimensional shaped fabricated object. Subsequently, the forming the powder layer 31 by supplying and flattening the powder and the discharging the fabrication liquid with the head 52 are repeated for the number of times to be employed to complete the three-dimensional shaped fabricated object (three-dimensional fabricated object).

Next, a behavior on the powder surface during recoating in the conventional technology will be described with reference to FIG. 8. FIG. 8 is an enlarged schematic view of the flattening roller 12 and the fabrication chamber 31. Powder transferred and supplied from the supply chamber to the fabrication chamber by the flattening roller is deposited in the fabrication chamber 31 at a density close to a bulk density, although the density depends on a material and a particle size distribution.

As illustrated in FIG. 8, the powder is spread over in the fabrication chamber 31 by the flattening roller 12. At this time, the powder having a small particle diameter and a small mass is blown up by rotation of the flattening roller 12, and thus, the powder supplied to the fabrication chamber has a smaller proportion of powder having a smaller particle diameter than the powder in the supply chamber. When the proportion of the powder having a small particle diameter is small, a small void is likely to be generated in the fabricated object, and a green body density decreases. In addition, there is also a problem that the number of contacts of the particles is reduced, and thus, sinterability is deteriorated.

To solve a problem that the proportion of the powder having a small particle diameter is small, a method of using powder having a large proportion of powder with a small particle diameter may be used. However, the powder having a large proportion of powder with a small particle diameter generally deteriorates in fluidity, and thus, there is a problem that such powder is non-uniformly supplied into a fabrication chamber when the powder is flattened by the flattening roller. On the other hand, if the powder is supplied to the fabrication chamber in a hopper configuration, there is a problem that the powder does not flow out smoothly and is supplied non-uniformly. These is a possibility that non-uniform quality occurs in the fabrication chamber. Therefore, it is desirable to solve the problem that the powder having a small particle diameter is reduced in amount by using a method other than changing a particle size distribution of the powder.

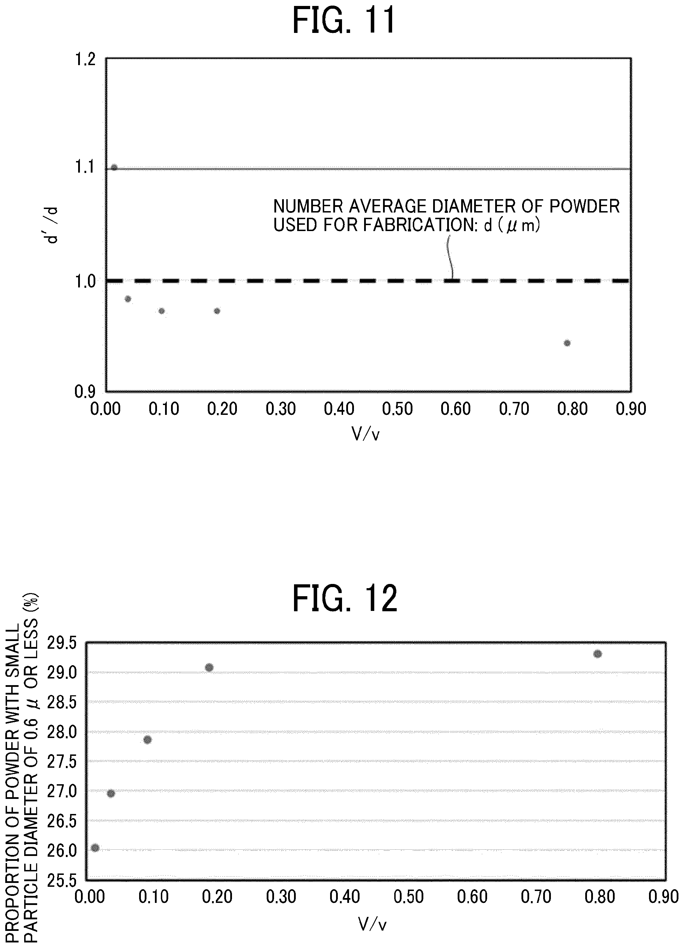

Next, as illustrated in FIG. 11, where d (μm) denotes a number average diameter of the powder contained in the container of the fabrication apparatus and d' (μm) denotes a number average diameter of the powder included in the fabricated object, it is obvious that the following relationship d > d' is satisfied. It is considered that such a relationship results because the number average diameter of the powder supplied into the fabrication chamber decreases from the following two reasons, and as a result, the number average diameter of the fabricated object formed from the powder within the fabrication chamber also decreases. The first reason is that the rotation speed of the flattening roller is adjusted within a constant range to thereby prevent the powder having a small particle diameter from scattering. The second reason is that the rotation speed of the flattening roller is similarly adjusted within a constant range to thereby increase a force for conveying the powder in a horizontal direction, and as a result, to easily eliminate the powder having a large particle diameter that is susceptible to the horizontal force.

The first reason is based on a relationship between V/v and the proportion of the powder having a small particle diameter in the fabricated object (see FIG. 12). FIG. 12 is a graph indicating a relationship between a peripheral speed of the flattening roller and a moving speed of the flattening roller, and a proportion of powder with a small particle diameter. When a value of V/v is small, especially when the rotation speed of the roller is excessive, the proportion of the powder with a small particle diameter in the fabricated object is small. A reason for this is considered that the force for blowing up the powder is large to easily scatter the powder having a small particle diameter. In particular, the amount of scattering of powder having a number average diameter of 0.6d or less, which means 40% or more smaller than the number average diameter d of the powder used for the fabrication, is varied greatly depending on a flattening condition.

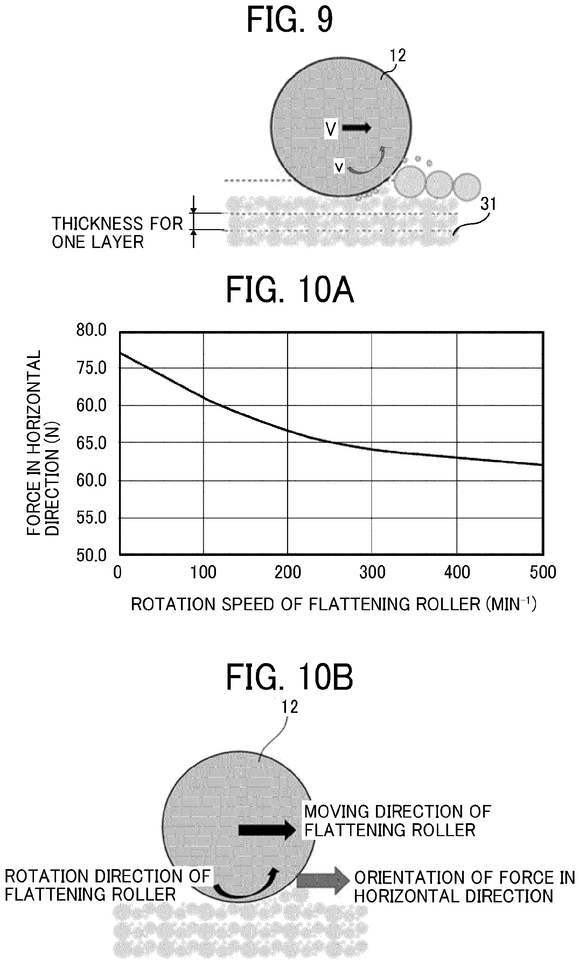

The second reason is based on a relationship between the rotation speed of the flattening roller 12 and the force in the horizontal direction (see FIGS. 10A and 10B). FIG. 10A is a graph indicating the relationship between the rotation speed of the flattening roller 12 and the force in the horizontal direction. FIG. 10B is a diagram illustrating a relationship between the rotation speed of the flattening roller 12 during recoating and the force in the horizontal direction.

As the peripheral speed v (mm/s) of the flattening roller 12 is smaller, the force applied in the horizontal direction is larger. Thus, the powder having a large particle diameter (i.e., powder having a larger number average diameter than the powder used for the fabrication) that easily flies off from the powder surface and is susceptible to the force of recoating receives the force in the horizontal direction and is easily discharged to the surplus powder receiver. As a result, the powder having a large particle diameter is not easily supplied to the powder surface. In particular, by setting the thickness of one layer to a range of 1 to 30 times the average particle diameter, more preferably 2 to 20 times the average particle diameter, the powder having a large particle diameter could be easily eliminated.

Here, if the moving speed V (mm/s) of the flattening roller 12 is increased, a force applied in the horizontal direction, out of the forces applied to the powder surface, is larger. It is obvious from the above results that such a fact prevents the scattering of the powder having a small particle diameter and increases an effect of eliminating the powder having a large particle diameter. Therefore, when a moving speed V of the flattening roller 12 is increased, as long as the following relationship V/v ≥ 0.04 is satisfied, even if a value of a peripheral speed v of the flattening roller is increased to some extent, a fabricated object satisfying the following relationship d > d' can be obtained.

Next, a method of obtaining the fabricated object satisfying the following relationship d > d' will be described. When the moving speed V (mm/s) of the flattening roller, a rotation speed $\omega$ (min)$^{-1}$ of the flattening roller, and a peripheral speed v (mm/s) of the flattening roller obtained from a diameter D mm of the flattening roller satisfy the following range, such a fabricated object can be obtained.

$$v = \pi D \omega \diagup 6\,0$$

$$\frac{V}{v} \geqq 0.\ 0\,4$$

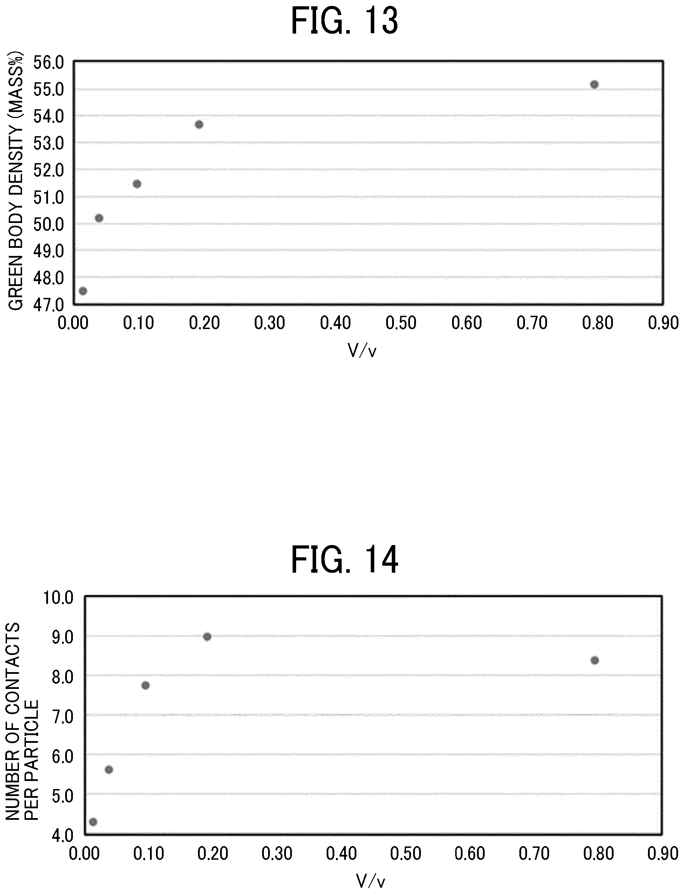

Here, to confirm the effect of the fabricated object satisfying the following relationship d > d', a green body density and the number of contacts, which were main characteristic values of the fabricated object, were measured. The results are presented in FIGS. 13 and 14. From the results of FIG. 13, the green body density is increased when the following relationship V/v ≥ 0.04 is satisfied, as compared to when the following relationship V/v < 0.04 is satisfied. This is because, in the present disclosure, the proportion of the powder having a small particle diameter is increased, the small powder thereby enters the gap inside the fabricated object, and the density of the green body is increased. FIG. 14 indicates a relationship between V/v and the number of contacts per particle. When the following relationship V/v ≥ 0.04 is satisfied, as compared with when the following relationship V/v < 0.04 is satisfied, the number of particle contacts per particle increases. It is known that the number of particle contacts affects the sinterability, and it is expected that as there are more particle contacts, the sintering density is improved.

EXAMPLES

Examples of the present invention will be described below, but the present invention is in no way limited to such examples.

(Comparative Example 1)

According to a method of manufacturing a fabricated object illustrated in FIGS. 7A to 7E, the fabricated object was manufactured under flattening conditions presented in Table 1. Sizes of the fabricated object were as follows: main scanning direction: 28 mm, sub-scanning direction: 10 mm, and laminating direction: 3 mm.

<Powder>

Al-Si based aluminum alloy powder (AlSi10Mg-30B, manufactured by Toyo Aluminum K.K.) was employed for the powder. A specific gravity of the powder was 2.7.

<Fabrication Liquid>

Three ingredients, JMR-10LL manufactured by JAPAN VAM & POVAL CO.,LTD., triglyme manufactured by SANKYO CHEMICAL Co., Ltd., and Surflon S-693 manufactured by AGC SEIMI CHEMICAL CO., LTD., were mixed to reach 13.35% by mass, 86.61% by mass, and 0.04% by mass, respectively, the resultant mixture was stirred with a magnetic stirrer for two hours while heating at 80°C, after the mixture was stirred for two hours, the mixture was continuously stirred until the room temperature was reached after stopping the heating to manufacture the fabrication liquid, and was discharged under discharge conditions presented in Table 1.

Table 1

| <Flattening condition> | |
|---|---|
| Rotation speed of flattening roller [min⁻¹] | 700 |
| Flattening roller diameter [mm] | 10 |
| Peripheral speed v of flattening roller [mm/s] | 366.5 |
| Moving speed V of flattening roller [mm/s] | 5 |
| V/v | 0.01 |
| <Discharge condition> | |
| Discharge amount [pL/voxel] | 35 |
| Discharge speed [m/s] | 5 |
| Resolution (Main scanning direction x sub-scanning direction) [dpi²] | 300 x 300 |

(Example 1)

When the object was fabricated similarly to the Comparative Example 1, except for lowering the rotation speed of the flattening roller and increasing the moving speed of the flattening roller under the flattening conditions as presented in Table 2 in Comparative Example 1, a fabricated object in which the following relationship d > d' was satisfied, was obtained.

Table 2

| <Flattening condition> | |
|---|---|
| Rotation speed of flattening roller [min⁻¹] | 300 |
| Flattening roller diameter [mm] | 50 |
| Peripheral speed v of flattening roller [mm/s] | 785.4 |
| Moving speed V of flattening roller [mm/s] | 30 |
| V/v | 0.04 |
| <Discharge condition> | |
| Discharge amount [pL/voxel] | 35 |
| Discharge speed [m/s] | 5 |
| Resolution (Main scanning direction x sub-scanning direction) [dpi²] | 300 x 300 |

(Example 2)

When the object was fabricated similarly to the Example 1, except for lowering the rotation speed of the flattening roller under the flattening conditions as presented in Table 3 in Example 1, a fabricated object in which the following relationship d > d' was satisfied, was obtained.

Table 3

| <Flattening condition> | |
|---|---|
| Rotation speed of flattening roller [min$^{-1}$] | 120 |
| Flattening roller diameter [mm] | 50 |
| Peripheral speed v of flattening roller [mm/s] | 314.2 |
| Moving speed V of flattening roller [mm/s] | 30 |
| V/v | 0.10 |
| <Discharge condition> | |
| Discharge amount [pL/voxel] | 35 |
| Discharge speed [m/s] | 5 |
| Resolution (Main scanning direction x sub-scanning direction) [dpi$^2$] | 300 x 300 |

(Example 3)

When the object was fabricated similarly to the Example 2, except for lowering the rotation speed of the flattening roller under the flattening conditions as presented in Table 4 in Example 2, a fabricated object in which the following relationship d > d' was satisfied, was obtained.

Table 4

| <Flattening condition> | |
|---|---|
| Rotation speed of flattening roller [min$^{-1}$] | 60 |
| Flattening roller diameter [mm] | 50 |
| Peripheral speed v of flattening roller [mm/s] | 157.1 |
| Moving speed V of flattening roller [mm/s] | 30 |
| V/v | 0.19 |
| <Discharge condition> | |
| Discharge amount [pL/voxel] | 35 |
| Discharge speed [m/s] | 5 |
| Resolution (Main scanning direction x sub-scanning direction) [dpi$^2$] | 300 x 300 |

(Example 4)

When the object was fabricated similarly to the Example 1, except for changing the rotation speed of the flattening roller and increasing the moving speed of the flattening roller under the flattening conditions as presented in Table 5 in Example 1, a fabricated object in which the following relationship d > d' was satisfied, was obtained.

Table 5

| <Flattening condition> | |
|---|---|
| Rotation speed of flattening roller [min$^{-1}$] | 240 |
| Flattening roller diameter [mm] | 20 |

(continued)

| <Flattening condition> | |
|---|---|
| Peripheral speed v of flattening roller [mm/s] | 251.3 |
| Moving speed V of flattening roller [mm/s] | 200 |
| V/v | 0.80 |
| <Discharge condition> | |
| Discharge amount [pL/voxel] | 35 |
| Discharge speed [m/s] | 5 |
| Resolution<br>(Main scanning direction x sub-scanning direction) [dpi$^2$] | 300 x 300 |

<Production of Beaker Work Body>

The powder and the fabrication liquid used for the fabrication of Examples 1 to 4 and the Comparative Example 1 were used to produce a beaker work body as follows. Here, the beaker work body is a test sample simply prepared without using a fabrication apparatus by placing a mixture in which the powder and the fabrication liquid are mixed into a mold and then curing the mixture. The beaker work body makes it possible to measure a particle size distribution of the powder (i.e., powder contained in the container) used for the object fabrication under the same condition as that of the fabricated object of the Examples 1 to 4 and the Comparative Example 1, under the same condition as that of the fabricated object.

Next, the obtained fabricated objects manufactured according to the Examples 1 to 4 and the Comparative Example 1 were evaluated for a particle size distribution, a green body density, and the number of particle contacts, as follows, and an effect determination 1 and an effect determination 2 were performed. The results are presented in Tables 7 and 8, and in FIGS. 11 to 14. The particle size distribution of the beaker work body is presented in Table 6.

<Measurement of Particle Size Distribution of Powder Included in Fabricated Object and Beaker Work Body>

The fabricated objects fabricated according to the Examples 1 to 4 and the Comparative Example 1 and the beaker work body were observed with an X-ray CT device to calculate the particle size distribution from image analysis of obtained three-dimensional CT images. Xradia 510 (manufactured by Carl Zeiss) was employed for the X-ray CT device. The imaging conditions were: an X-ray voltage of 80 kV, an X-ray power of 7 W, an exposure time of 3 seconds, a capturing angle of 360 degrees, and 2401 images to be captured. A visual field range was of cylindrical shape having diameter ($\varphi$) 1529.7 x height (H) 1529.7 $\mu m^3$, and a voxel size was 1.5057 $\mu m$. Three-dimensional (3D) image analysis software, Dragonfly (manufactured by Object Research System) was employed for the image analysis. The analysis was carried out as follows. Firstly, for the visual field range, image segmentation (identification) was performed using deep learning (algorithm: FC-DenseNet) to separate particles and voids. Subsequently, aggregated particles were separated one by one by a Python module called OpenPNM. Finally, an equivalent diameter was calculated for each particle, and the number-based particle size distribution (i.e., proportion of the small-particle-diameter powder having a number average diameter of ($0.6 \times$ number average diameter) $\mu m$ or less) for 10,000 particles was calculated.

<Green Body Density>

For a method for measuring the density of the fabricated object, a measuring method using Archimedes' principle was employed. After measuring a weight A in the atmosphere, a weight B when the fabricated object is submerged into a liquid having a known density po is measured. When p' denotes the density specific to a material of the powder contained in the container, the density p (mass%) of the fabricated object (green body) was obtained as follows.

$$\rho = 100\rho_0 A/\rho'(A - B)$$

Pure water was used for a liquid used for the density measurement. To measure the green body having a gap therein, the weight A in the air was measured, and thereafter, a waterproof spray was applied to prevent the liquid from penetrating into the inside of the fabricated object.

<Number of Particle Contacts per Particle>

Observation with an X-ray CT device was performed, and the number of particle contacts was calculated from image analysis of the obtained three-dimensional CT image. Xradia 510 (manufactured by Carl Zeiss) was employed for the X-ray CT device. The imaging conditions were: an X-ray voltage of 80 kV, an X-ray power of 7 W, an exposure time of 3 seconds, a capturing angle of 360 degrees, and 2401 images to be captured. A visual field range was of cylindrical shape having diameter ($\varphi$) 1529.7 x height (H) 1529.7 $\mu$m$^3$, and a voxel size was 1.5057 $\mu$m. Three-dimensional (3D) image analysis software, Dragonfly (manufactured by Object Research System) was employed for the image analysis. The analysis was carried out as follows. Firstly, for the visual field range, image segmentation (identification) was performed using deep learning (algorithm: FC-DenseNet) to separate particles and voids. Subsequently, aggregated particles were separated one by one by a Python module called OpenPNM, and a particle contact state was visualized. The total number of contacts and the total number of particles within a measurement range were measured, and the number of contacts per particle was calculated by the following formula.

$$\text{Number of contacts per particle} = (\text{total number of contacts x 2})/\text{number of particles}$$

<Effect Determination 1>

An effect determination 1 was performed based on the following determination criteria.

[Determination Criteria]

Good: d'/d < 1.0
Poor: d'/ d $\geq$ 1.0

<Effect Determination 2>

An effect determination 2 was performed based on the following determination criteria.

[Determination Criteria]

Excellent: The proportion of the small particle diameter (0.6d or less) in the fabricated object is larger than the proportion of the small particle diameter (0.6d or less) of the powder contained in the container.
Good: The proportion of the small particle diameter (0.6d or less) in the fabricated object is smaller than the proportion of the small particle diameter (0.6d or less) of the powder contained in the container.

Table 6

| Particle size distribution of beaker work body | |
|---|---|
| Number average diameter d of powder used for fabrication [$\mu$m] | Proportion of small particle diameter (0.6d or less) [%] |
| 28.41 | 27.30 |

Table 7

| | Powder material | Peripheral speed v of flattening roller (mm/s) | Moving speed V of flattening roller (mm/s) | d ($\mu$m) | d' ($\mu$m) | d/d' | V/v | d'/d |
|---|---|---|---|---|---|---|---|---|
| Ex. 1 | Aluminum alloy | 785.4 | 30 | 28.41 | 27.91 | 1.01791 | 0.04 | 0.98 |
| Ex. 2 | Aluminum alloy | 314.2 | 30 | 28.41 | 27.61 | 1.02898 | 0.1 | 0.97 |

(continued)

| | Powder material | Peripheral speed v of flattening roller (mm/s) | Moving speed V of flattening roller (mm/s) | d (μm) | d' (μm) | d/d' | V/v | d'/d |
|---|---|---|---|---|---|---|---|---|
| Ex. 3 | Aluminum alloy | 157.1 | 30 | 28.41 | 27.62 | 1.0286 | 0.19 | 0.97 |
| Ex. 4 | Aluminum alloy | 251.3 | 200 | 28.41 | 26.80 | 1.06007 | 0.8 | 0.94 |
| Com. Ex. 1 | Aluminum alloy | 366.5 | 5 | 28.41 | 31.25 | 0.90912 | 0.01 | 1.10 |

Table 8

| | Proportion of small particle diameter (0.6d or less) in fabricated object (%) | Proportion of small particle diameter (0.6d or less) of powder contained in container (%) | Green body density | Number of particle contacts per particle | Effect determination 1 | Effect determination 2 |
|---|---|---|---|---|---|---|
| Ex. 1 | 26.96 | 27.3 | 50.2 | 5.6 | Good | Good |
| Ex. 2 | 27.87 | 27.3 | 51.5 | 7.7 | Good | Excellent |
| Ex. 3 | 29.09 | 27.3 | 53.7 | 9.0 | Good | Excellent |
| Ex. 4 | 29.31 | 27.3 | 55.2 | 8.4 | Good | Excellent |
| Com. Ex. 1 | 26.04 | 27.3 | 47.5 | 4.3 | Poor | Good |

From the results of Tables 7 to 8 and FIGS. 11 to 14, in the Examples 1 to 4, it was found that when the following relationship $V/v \geq 0.04$ was satisfied, a fabricated object in which the relationship of $d > d'$ was satisfied, was obtained, a green body density was large, and an excellent green body characteristic including a large number of interparticle points was provided.

(Examples 5 to 25 and Comparative Examples 2 to 7)

In Examples 1 to 4 and Comparative Example 1, fabricated objects of Examples 5 to 25 and Comparative Examples 2 to 7 were obtained similarly to the Examples 1 to 4 and Comparative Example 1 except for changing to the conditions presented in Tables 9 and 10. Each of the obtained fabricated objects was evaluated for a particle size distribution, a green body density, and the number of particle contacts, similarly to the Examples 1 to 4 and the Comparative Example 1, and the effect determination 1 and the effect determination 2 were performed. The results are presented in Tables 9 and 10.

Table 9

| | Powder material | Peripheral speed v of flattening roller (mm/s) | Moving speed V of flattening roller (mm/s) | d(μm) | d' (μm) | d/d' | V/v | d'/d |
|---|---|---|---|---|---|---|---|---|
| Ex. 5 | Aluminum alloy | 314.2 | 30 | 4.46 | 4.38 | 1.01826 | 0.1 | 0.98 |
| Ex. 6 | Aluminum alloy | 785.4 | 30 | 4.46 | 4.41 | 1.01134 | 0.04 | 0.99 |
| Com. Ex. 2 | Aluminum alloy | 366.5 | 5 | 4.46 | 4.59 | 0.97168 | 0.01 | 1.03 |

(continued)

| | Powder material | Peripheral speed v of flattening roller (mm/s) | Moving speed V of flattening roller (mm/s) | d(μm) | d' (μm) | d/d' | V/v | d'/d |
|---|---|---|---|---|---|---|---|---|
| Ex. 7 | Aluminum alloy | 314.2 | 30 | 20.16 | 19.97 | 1.00951 | 0.1 | 0.99 |
| Ex. 8 | Aluminum alloy | 314.2 | 30 | 50.34 | 48.78 | 1.03198 | 0.1 | 0.97 |
| Ex. 9 | Aluminum alloy | 785.4 | 30 | 50.34 | 49.48 | 1.01738 | 0.04 | 0.98 |
| Com. Ex. 3 | Aluminum alloy | 366.5 | 5 | 50.34 | 51.92 | 0.96957 | 0.01 | 1.03 |
| Ex. 10 | Stainless steel | 314.2 | 30 | 2.99 | 2.91 | 1.02749 | 0.1 | 0.97 |
| Ex. 11 | Stainless steel | 314.2 | 30 | 25.62 | 25.48 | 1.00549 | 0.1 | 0.99 |
| Ex. 12 | Stainless steel | 314.2 | 30 | 50.13 | 49.86 | 1.00542 | 0.1 | 0.99 |
| Ex. 13 | Stainless steel | 785.4 | 30 | 25.62 | 25.17 | 1.01788 | 0.04 | 0.98 |
| Com. Ex. 4 | Stainless steel | 366.5 | 5 | 25.62 | 27.11 | 0.94504 | 0.01 | 1.06 |
| Ex. 14 | Titanium alloy | 314.2 | 30 | 9.75 | 9.59 | 1.01668 | 0.1 | 0.98 |
| Ex. 15 | Titanium alloy | 314.2 | 30 | 24.78 | 24.53 | 1.01019 | 0.1 | 0.99 |
| Ex. 16 | Titanium alloy | 314.2 | 30 | 80.5 | 79.4 | 1.01385 | 0.1 | 0.99 |
| Ex. 17 | Titanium alloy | 785.4 | 30 | 24.78 | 24.61 | 1.00691 | 0.04 | 0.99 |
| Com. Ex. 5 | Titanium alloy | 366.5 | 5 | 24.78 | 25.03 | 0.99001 | 0.01 | 1.01 |
| Ex. 18 | Pure copper | 314.2 | 30 | 2.86 | 2.67 | 1.07116 | 0.1 | 0.93 |
| Ex. 19 | Pure copper | 314.2 | 30 | 27.95 | 27.41 | 1.0197 | 0.1 | 0.98 |
| Ex. 20 | Pure copper | 314.2 | 30 | 81.29 | 80.41 | 1.01094 | 0.1 | 0.99 |
| Ex. 21 | Pure copper | 785.4 | 30 | 27.95 | 27.58 | 1.01342 | 0.04 | 0.99 |
| Com. Ex. 6 | Pure copper | 366.5 | 5 | 27.95 | 28.13 | 0.9936 | 0.01 | 1.01 |
| Ex. 22 | Copper alloy | 314.2 | 30 | 2.73 | 2.59 | 1.05405 | 0.1 | 0.95 |
| Ex. 23 | Copper alloy | 314.2 | 30 | 29.88 | 27.8 | 1.07482 | 0.1 | 0.93 |

(continued)

|  | Powder material | Peripheral speed v of flattening roller (mm/s) | Moving speed V of flattening roller (mm/s) | d(μm) | d' (μm) | d/d' | V/v | d'/d |
|---|---|---|---|---|---|---|---|---|
| Ex. 24 | Copper alloy | 314.2 | 30 | 80.95 | 79.18 | 1.02235 | 0.1 | 0.98 |
| Ex. 25 | Copper alloy | 785.4 | 30 | 29.88 | 28.45 | 1.05026 | 0.04 | 0.95 |
| Com. Ex. 7 | Copper alloy | 366.5 | 5 | 29.88 | 30.16 | 0.99072 | 0.01 | 1.01 |

Table 10

|  | Proportion of small particle diameter (0.6d or less) in fabricated object (%) | Proportion of small particle diameter (0.6d or less) of powder contained in container (%) | Green body density | Number of particle contacts per particle | Effect determination 1 | Effect determination 2 |
|---|---|---|---|---|---|---|
| Ex. 5 | 27.92 | 27.4 | 50.1 | 6.8 | Good | Excellent |
| Ex. 6 | 25.98 | 27.4 | 48.7 | 4.7 | Good | Good |
| Com. Ex. 2 | 25.75 | 27.4 | 48.7 | 4.7 | Poor | Good |
| Ex. 7 | 27.82 | 27.6 | 51.3 | 7.5 | Good | Excellent |
| Ex. 8 | 28.52 | 26.9 | 55.7 | 7.1 | Good | Excellent |
| Ex. 9 | 26.49 | 26.9 | 49.3 | 4.9 | Good | Good |
| Com. Ex. 3 | 24.70 | 26.9 | 49.2 | 4.7 | Poor | Good |
| Ex. 10 | 27.86 | 27.3 | 51.7 | 6.1 | Good | Excellent |
| Ex. 11 | 27.93 | 27.1 | 53.7 | 6.6 | Good | Excellent |
| Ex. 12 | 28.88 | 28.5 | 54.1 | 6.9 | Good | Excellent |
| Ex. 13 | 26.38 | 27.1 | 51.9 | 4.7 | Good | Good |
| Com. Ex. 4 | 25.91 | 27.1 | 50.2 | 4.6 | Poor | Good |
| Ex. 14 | 27.48 | 26.6 | 51.8 | 5.9 | Good | Excellent |
| Ex. 15 | 27.52 | 26.5 | 52.5 | 6.1 | Good | Excellent |
| Ex. 16 | 27.95 | 27.2 | 52.8 | 6.5 | Good | Excellent |
| Ex. 17 | 25.83 | 26.5 | 51.3 | 5.1 | Good | Good |
| Com. Ex. 5 | 25.10 | 26.5 | 50.6 | 4.1 | Poor | Good |
| Ex. 18 | 27.69 | 27.4 | 51.6 | 5.6 | Good | Excellent |
| Ex. 19 | 27.97 | 26.9 | 52.7 | 6.0 | Good | Excellent |
| Ex. 20 | 28.16 | 27.8 | 53.1 | 6.5 | Good | Excellent |
| Ex. 21 | 26.57 | 26.9 | 49.7 | 5.3 | Good | Good |
| Com. Ex. 6 | 25.35 | 26.9 | 49.4 | 4.8 | Poor | Good |

(continued)

|  | Proportion of small particle diameter (0.6d or less) in fabricated object (%) | Proportion of small particle diameter (0.6d or less) of powder contained in container (%) | Green body density | Number of particle contacts per particle | Effect determination 1 | Effect determination 2 |
|---|---|---|---|---|---|---|
| Ex. 22 | 27.48 | 26.7 | 51.5 | 5.7 | Good | Excellent |
| Ex. 23 | 27.54 | 27.2 | 52.9 | 6.7 | Good | Excellent |
| Ex. 24 | 28.11 | 27.0 | 53.3 | 6.8 | Good | Excellent |
| Ex. 25 | 25.82 | 27.2 | 50.0 | 5.9 | Good | Good |
| Com. Ex. 7 | 25.43 | 27.2 | 49.8 | 4.1 | Poor | Good |

The details of the powder in Table 9 are as follows. The following powders were classified and used to obtain a target number average diameter d.

* Aluminum alloy: Al-Si based aluminum alloy (manufactured by Toyo Aluminum K.K., AlSi10Mg-30B, AlSi10Mg-50B)
* Stainless steel: SUS316L (manufactured by Sanyo Special Steel Co., Ltd., product name: PSS316L)
* Titanium alloy: Ti-6AL-4V (manufactured by TOHO TECHNICAL SERVICE, product name: ACA450, ACA150)
* Pure copper: manufactured by Mitsui Mining & Smelting Co., Ltd., product names: AS-C15, MA-CC-S, MA-CH-S
* Copper alloy: manufactured by Mitsui Mining & Smelting Co., Ltd., product name: MA-CCR25L

From the results in Tables 9 and 10, it was found that a similar effect to that of the aluminum alloy could be obtained even when stainless steel, titanium alloy, pure copper, and copper alloy were used as the powders having different types of material and particle diameters. From this, it was found that the effect of the present invention could be widely obtained as long as within the range of the types of materials and particle diameter of the metal powder generally used for three-dimensional fabrication.

Further, in the present disclosure, the supply chamber is used as the container that holds the powder to be supplied to the fabrication chamber of the fabrication apparatus, but the present disclosure can also be applied to a hopper configuration. Although the present disclosure employs the process of discharging the fabrication liquid by using an inkjet head as a curing means, another process in which a laser or an electron beam is used for the curing means may be applied. If any one of the following, that is, a surface roughness of the flattening roller is 0.5 $\mu$m or more, a ground resistance of the flattening roller is 100$\Omega$ or more, and an absolute value of a surface potential of the powder is 0.5 kV or more, is satisfied, the powder adheres to the flattening roller, and a powder surface after flattening is uneven and the surface roughness deteriorates. Therefore, it is preferable that a surface roughness of the flattening roller of less than 0.5 $\mu$m, a ground resistance of the flattening roller of less than 100$\Omega$, and an absolute value of a surface potential of the powder of less than 0.5 kV are satisfied.

For example, embodiments of the present invention include the following.

<1> A fabricated object manufactured from a powder included in a container of a fabrication apparatus, wherein the fabricated object satisfies the following relationship d > d', where d ($\mu$m) denotes a number average diameter of the powder contained in the container and d' ($\mu$m) denotes a number average diameter of the powder included in the fabricated object.
<2> The fabricated object according to <1>, wherein a number average diameter d' of the powder included in the fabricated object is 3 $\mu$m or more and 80 $\mu$m or less.
<3> The fabricated object according to <1> or <2>, wherein the number average diameter d of the powder contained in the container is 3 $\mu$m or more and 80 $\mu$m or less.
<4> The fabricated object according to any one of <1> to <3>, wherein a proportion of small-particle-diameter powder having a number particle diameter of (0.6 × number average diameter d) $\mu$m or less in the powder contained in the container is 26% or more.
<5> The fabricated object according to any one of <1> to <4>, wherein the powder contains a metal particle, and the metal particle contains at least one selected from the group consisting of aluminum, zinc, magnesium, copper, stainless steel, titanium, and an alloy thereof.
<6> The fabricated object according to <5>, wherein a surface of the metal particle is free of resin coating.

<7> A fabrication apparatus comprising: a fabrication chamber in which a powder layer including powder is laminated; and

a flattener configured to flatten the powder layer,
wherein the flattener satisfies the following relationship V/v ≥ 0.04, where v represents a peripheral speed (mm/s) of the flattener and V represents a moving speed (mm/s) of the flattener.

<8> The fabrication apparatus according to <7>, wherein the flattener satisfies the following relationship V/v ≥ 0.1.
<9> A method for manufacturing a fabricated object, comprising: laminating a powder layer including powder; and

flattening the powder layer with a flattener,
wherein the flattener satisfies the following relationship V/v ≥ 0.04, where v represents a peripheral speed (mm/s) of the flattener and V represents a moving speed (mm/s) of the flattener.

<10> The method for manufacturing a fabricated object according to <9>, wherein the flattener satisfies the following relationship V/v ≥ 0.1.

According to the fabricated object according to any one of <1> to <6>, the fabrication apparatus according to any one of <7> and <8>, and the method for manufacturing a fabricated object according to any one of <9> and <10>, it is possible to solve various conventional problems and achieve the object of the present invention.


**Claims**

1. A fabricated object manufactured from a powder contained in a container of a fabrication apparatus,
wherein the fabricated object satisfies the following relationship d > d', where d (μm) denotes a number average diameter of the powder contained in the container and d'(μm) denotes a number average diameter of the powder included in the fabricated object.

2. The fabricated object according to claim 1, wherein the number average diameter d' of the powder included in the fabricated object is 3 μm or more and 80 μm or less.

3. The fabricated object according to claim 1 or 2, wherein the number average diameter d of the powder contained in the container is 3 μm or more and 80 μm or less.

4. The fabricated object according to any one of claims 1 to 3, wherein a proportion of small-particle-diameter powder having a number-based particle diameter of $(0.6 \times$ the number average diameter d) μm or less in the powder contained in the container is 26% or more.

5. The fabricated object according to any one of claims 1 to 4, wherein the powder contains a metal particle, and the metal particle contains at least one selected from the group consisting of aluminum, zinc, magnesium, copper, stainless steel, titanium, and an alloy thereof.

6. The fabricated object according to claim 5, wherein a surface of the metal particle is free of resin coating.

7. A fabrication apparatus, comprising:

a fabrication chamber (22) in which a powder layer (31) including powder (20) is to be laminated; and
a flattener (12) configured to flatten the powder layer (31),
wherein the flattener (12) satisfies the following relationship V/v ≥ 0.04, where v represents a peripheral speed (mm/s) of the flattener (12) and V represents a moving speed (mm/s) of the flattener (12).

8. The fabrication apparatus according to claim 7, wherein the flattener (12) satisfies the following relationship V/v ≥ 0.1.

9. A method for manufacturing a fabricated object, comprising:

laminating a powder layer (31) including powder (20); and
flattening the powder layer (31) with a flattener (12),

wherein the flattener (12) satisfies the following relationship V/v ≥ 0.04, where v represents a peripheral speed (mm/s) of the flattener (12) and V represents a moving speed (mm/s) of the flattener (12).

10. The method according to claim 9, wherein the flattener (12) satisfies the following relationship V/v ≥ 0.1.

# FIG. 1

# FIG. 2

# FIG. 3

# FIG. 4

# FIG. 5

# FIG. 6

THREE-DIMENSIONAL FABRICATION APPARATUS  500
601

```
600                     500A       501    502    503      504
┌──────────┐            ┌─────────────────────────────────┐
│FABRICATION│      506  │    ┌────┐ ┌────┐ ┌────┐  ┌──────┐│
│  DATA    │           │    │CPU │ │ROM │ │RAM │  │NVRAM ││
│ CREATION │───→ EXTER-│    └────┘ └────┘ └────┘  └──────┘│
│APPARATUS │     NAL I/F│                                  │
└──────────┘           │       505        507             │
                        │      ┌────┐    ┌────┐            │
                        │      │ASIC│    │I/O │            │
                        │      └────┘    └────┘            │
                        └─────────────────────────────────┘
```

| | | |
|---|---|---|
| HEAD DRIVE CONTROL UNIT | 508 | HEAD — 52 |
| MOTOR DRIVE UNIT | 510 | X-DIRECTION SCAN-NING ASSEMBLY — 550 |
| MOTOR DRIVE UNIT | 511 | Z-DIRECTION ELEVATING AND LOWERING ASSEMBLY — 551 |
| MOTOR DRIVE UNIT | 512 | Y-DIRECTION SCAN-NING ASSEMBLY — 552 |
| MOTOR DRIVE UNIT | 514 | MOTOR (FABRICATION STAGE) — 28 |
| MOTOR DRIVE UNIT | 515 | MOTOR (FOR ROLLER RECIPROCATION) — 553 |
| MOTOR DRIVE UNIT | 516 | MOTOR (FOR ROLLER ROTATION) — 26 |
| MAINTENANCE DRIVE UNIT | 518 | MAINTENANCE ASSEMBLY — 61 |
| SUPPLY DRIVE UNIT | 519 | POWDER SUPPLY UNIT — 80 |

OPERATION PANEL  522

TEMPERA-TURE AND HUMIDITY SENSOR  560

SENSORS

EP 4 180 153 A1

# FIG. 7A

# FIG. 7B

# FIG. 7C

# FIG. 7D

# FIG. 7E

# FIG. 8

THICKNESS FOR ONE LAYER

# FIG. 9

THICKNESS FOR ONE LAYER

# FIG. 10A

FORCE IN HORIZONTAL DIRECTION (N)

ROTATION SPEED OF FLATTENING ROLLER (MIN$^{-1}$)

# FIG. 10B

MOVING DIRECTION OF FLATTENING ROLLER

ROTATION DIRECTION OF FLATTENING ROLLER

ORIENTATION OF FORCE IN HORIZONTAL DIRECTION

## FIG. 11

## FIG. 12

# FIG. 13

# FIG. 14

Europäisches
Patentamt

European
Patent Office

Office européen
des brevets

# EUROPEAN SEARCH REPORT

**Application Number**

EP 22 20 4145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 902 537 A (ALMQUIST THOMAS A [US] ET AL) 11 May 1999 (1999-05-11)<br>* figure 2a *<br>* column 16, line 44 – line 56 *<br>----- | 1-10 | INV.<br>B22F10/34<br>B22F12/63<br>B29C64/218<br>B22F10/14 |
| X | SHEYDAEIAN ESMAT ET AL: "On the effect of throughout layer thickness variation on properties of additively manufactured cellular titanium structures",<br>ADDITIVE MANUFACTURING,<br>vol. 18, 8 September 2017 (2017-09-08),<br>pages 40-47, XP93031054,<br>NL<br>ISSN: 2214-8604, DOI:<br>10.1016/j.addma.2017.08.017<br>* page 41; table 1 *<br>----- | 1-10 | B28B1/00<br>B33Y10/00<br>B33Y30/00<br>B33Y80/00 |
| X | US 2020/139439 A1 (JOHN DAVID [GB] ET AL)<br>7 May 2020 (2020-05-07)<br>* paragraph [0027] *<br>----- | 1 | |

**TECHNICAL FIELDS SEARCHED (IPC)**

B22F
B29C
B33Y
B28B
C04B

The present search report has been drawn up for all claims

| Place of search | Date of completion of the search | Examiner |
|---|---|---|
| The Hague | 13 March 2023 | Mensink, Rob |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 4145

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2023

| Patent document cited in search report | | Publication date | Patent family member(s) | | | Publication date |
|---|---|---|---|---|---|---|
| US 5902537 | A | 11-05-1999 | AT | 216951 | T | 15-05-2002 |
| | | | AU | 4971396 | A | 21-08-1996 |
| | | | BR | 9607005 | A | 28-10-1997 |
| | | | CA | 2210802 | A1 | 08-08-1996 |
| | | | CN | 1172451 | A | 04-02-1998 |
| | | | DE | 69621001 | T2 | 03-04-2003 |
| | | | EP | 0807014 | A2 | 19-11-1997 |
| | | | JP | 3839479 | B2 | 01-11-2006 |
| | | | JP | H10513130 | A | 15-12-1998 |
| | | | US | 5902537 | A | 11-05-1999 |
| | | | WO | 9623647 | A2 | 08-08-1996 |
| US 2020139439 | A1 | 07-05-2020 | CA | 3068193 | A1 | 10-01-2019 |
| | | | CN | 111093864 | A | 01-05-2020 |
| | | | EP | 3648914 | A1 | 13-05-2020 |
| | | | GB | 2570618 | A | 07-08-2019 |
| | | | JP | 2020525643 | A | 27-08-2020 |
| | | | US | 2020139439 | A1 | 07-05-2020 |
| | | | WO | 2019008348 | A1 | 10-01-2019 |

EPO FORM P0459

For more details about this annex : see Official Journal of the European Patent Office, No. 12/82

**REFERENCES CITED IN THE DESCRIPTION**

**Patent documents cited in the description**

- JP 6620505 B